# FASCICULE DE BREVET EUROPEEN

(11) **EP 4 103 442 B1**
(45) Date de publication et mention de la délivrance du brevet: **19.02.2025**
(21) Numéro de dépôt: 21709070.3
(22) Date de dépôt: 09.02.2021
(51) Int. Cl.: B61D 25/00, B60J 1/10

(54) **SYSTEME DE FIXATION D'UN VITRAGE LATERAL DE MOYEN DE TRANSPORT AVEC UN VERROU**
SYSTEM ZUM BEFESTIGEN EINER SEITENVERGLASUNG EINES TRANSPORTMITTELS MIT EINEM SCHLOSS
SYSTEM FOR FASTENING A SIDE GLAZING OF A MEANS OF TRANSPORT WITH A LOCK

(30) Priorité: 11.02.2020 FR 2001340
(43) Date de publication de la demande: 21.12.2022
(73) Titulaire: Saint-Gobain Glass France, 92400 Courbevoie (FR)
(72) Inventeur: GASTAL, Guillaume, 68-200 Zary (PL)
(74) Mandataire: Saint-Gobain Recherche
(86) Numéro de dépôt international: PCT/FR2021/050232
(87) Numéro de publication internationale: WO 2021/160962

(56) Documents cités:
- WO-A1-2019/228850
- DE-A1- 3 301 757
- DE-A1- 4 009 348
- JP-U- H 076 023
- US-A- 2 256 548

## Description

L'invention concerne la fixation d'un vitrage latéral d'un moyen de transport, et en particulier d'un vitrage de train, à une baie périphérique, généralement métallique, ledit vitrage étant un vitrage multiple, fixe. Ce type de vitrage est habituellement fixé à la baie du train en position verticale.

L'invention concerne plus particulièrement la fixation d'un vitrage latéral présentant une face extérieure qui fait face à un espace extérieur et une face intérieure qui fait face à un espace intérieur, ladite face extérieure du vitrage étant en continuité d'aspect avec une face extérieure ou un flanc extérieur de ladite baie sur toute sa périphérie. La continuité d'aspect ne signifie pas qu'il y a un contact entre la face extérieure du vitrage est la face extérieure de la baie car il est connu qu'il faut éviter un tel contact, surtout lorsque la baie est métallique ; la continuité d'aspect implique que, vue en coupe transversale verticale, la face extérieure de la baie est dans la continuité de la face extérieure du vitrage avec une distance non nulle entre elles.

Un tel vitrage multiple de moyen de transport, comprend habituellement :
- une vitre extérieure ayant une face extérieure qui fait face à un espace extérieur, une face intermédiaire à l'opposé de la face extérieure, ainsi qu'un chant périphérique,
- une vitre intérieure ayant une face intérieure qui fait face à un espace intérieur, une face intermédiaire à l'opposé de la face intérieure, ainsi qu'un chant périphérique,
- et une structure interne qui est située en périphérie interne de ladite vitre extérieure et en périphérie interne de ladite vitre intérieure en étant plus vers le centre que le chant périphérique respectivement de ladite vitre extérieure et de ladite vitre intérieure, et qui tient ces deux vitres ensemble de telle sorte que le vitrage réalise une séparation entre ledit espace extérieur et ledit espace intérieur avec une cavité de vitrage située entre lesdites vitres.

Il est connu, notamment de la demande internationale de brevet N° WO 2019/228850, de prévoir qu'un vitrage multiple de moyen de transport comporte par ailleurs une structure de cadre de vitrage avec :
- une partie de cette structure qui est une structure interne et qui est située en périphérie interne de ladite vitre extérieure et en périphérie interne de ladite vitre intérieure en étant plus vers le centre que le chant périphérique respectivement de ladite vitre extérieure et de ladite vitre intérieure, et qui tient ces deux vitres ensemble de telle sorte que le vitrage réalise une séparation entre ledit espace extérieur et ledit espace intérieur avec une cavité de vitrage située entre lesdites vitres, et
- une partie de cette structure qui est une structure externe et qui s'étend en périphérie externe de ladite vitre extérieure et/ou en périphérie externe de ladite vitre intérieure en étant plus loin que le chant périphérique respectivement de ladite vitre extérieure et/ou de ladite vitre intérieure en partant du centre de la vitre.

Une telle structure externe de vitrage est alors fixée mécaniquement et/ou chimiquement à la baie que le vitrage doit fermer.

Ainsi, dans ce document, la structure interne intègre l'espaceur 71 et le cordon de mastic 76 qui sont situés tous les deux en périphérie interne de la cavité de vitrage 8 et la structure externe intègre le cordon de colle 70 et le cadre 72.

Une autre solution de fixation d'un vitrage de moyen de transport est visible dans la demande internationale de brevet N° WO 2016/151256 : le vitrage est simplement collé par un cordon de colle périphérique, visible en noir sur les figures de ce document.

L'art antérieur connaît par ailleurs les documents US 2,256,548, DE 4009348 et JP-H07-6023.

Les solutions de fixation de l'art antérieur par collage ou par fixation mécanique par cadre en deux parties ou encore par clame sont satisfaisantes dans la mesure ou le vitrage est correctement fixé mais nécessitent d'accéder à l'intérieur du moyen de transport lors de la fixation ; or cet accès peut être difficile. Cet accès difficile complexifie par ailleurs beaucoup le remplacement d'un tel vitrage au cours de la vie du moyen de transport.

Par ailleurs, en fin de vie du moyen de transport, ces solutions imposent des opérations complexes de démontage, de recyclage et de tri.

Le but de l'invention est de permettre de réaliser un vitrage multiple, fixe, et fixé à une baie de carrosserie de moyen de transport par l'extérieur, sans avoir besoin d'accéder à l'intérieur pour le remplacement.

Un autre but est de permettre de réaliser un tel vitrage sans prévoir de cadre rigide externe et notamment sans cadre en métal ou en alliage métallique externe au vitrage en lui-même. En effet, il peut être difficile de gérer la tenue dans le temps, notamment la tenue à la corrosion, d'un cadre en métal ou en alliage métallique.

En outre, le vitrage coûte alors moins cher et il est moins lourd.

Par ailleurs, ce cadre diminue en général le clair de vitrage alors sa suppression peut permettre d'augmenter ce clair de vitrage, pour une dimension de baie identique.

Enfin, la suppression du cadre de structure externe peut permettre de réaliser une baie moins profonde, et d'augmenter ainsi l'espace disponible à l'intérieur du moyen de transport.

L'invention repose ainsi sur le fait de prévoir au moins un verrou, et de préférence plusieurs verrous, et en particulier plusieurs verrous le long de chaque côté du vitrage, pour retenir mécaniquement et efficacement un vitrage multiple par la périphérie de la cavité de vitrage tout en permettant de le changer rapidement, uniquement par l'extérieur.

Ainsi, au moins une prise, et de préférence une multitude de prises, est (ou sont) réalisée(s) directement dans le scellement du vitrage multiple et uniquement dans ce scellement, tout autour de la baie, sans autre fixation mécanique.

D'une manière surprenante, il a été constaté qu'il était possible de fixer ainsi un vitrage dans une baie périphérique, même pour un vitrage destiné à subir de nombreuses vibrations en raison de son usage comme un vitrage d'un moyen de transport, et notamment d'un train.

L'invention a pour objet, dans son acception la plus large, un système de fixation d'un vitrage latéral d'un moyen de transport, en particulier un vitrage de train, à une baie périphérique selon la revendication 1. Dans ce système de fixation, ledit vitrage est un vitrage multiple, fixe, présentant une face extérieure qui fait face à un espace extérieur et une face intérieure qui fait face à un espace intérieur, ladite face extérieure du vitrage étant en continuité d'aspect avec une face extérieure de ladite baie sur toute sa périphérie et ledit vitrage comportant :
- une vitre extérieure ayant une face extérieure qui fait face à un espace extérieur, ladite vitre extérieure étant de préférence feuilletée et comprenant alors au moins une feuille de verre extérieure, une feuille de verre intérieure, ainsi qu'une feuille de matière plastique située entre ladite feuille de verre extérieure et ladite feuille de verre intérieure, chaque feuille de ladite vitre extérieure présentant un chant périphérique,
- une vitre intérieure, qui peut éventuellement être feuilletée, ayant une face intérieure qui fait face à un espace intérieur, une face intermédiaire à l'opposé de la face intérieure, ainsi qu'un chant périphérique,
- une structure interne qui est située en périphérie interne de ladite vitre extérieure et en périphérie interne de ladite vitre intérieure en étant plus vers le centre que le chant périphérique respectivement de ladite vitre extérieure et de ladite vitre intérieure, et qui tient ces deux vitres ensemble de telle sorte que le vitrage réalise une séparation entre ledit espace extérieur et ledit espace intérieur avec une cavité de vitrage située entre lesdites vitres.

Le vitrage selon l'invention est remarquable en ce que ladite structure interne comporte une cavité d'accrochage présentant un fond centripète et une ouverture centrifuge, en ce que ladite baie comporte un flanc intérieur présentant un trou de fixation qui est situé plus centrifuge que ledit chant de ladite vitre intérieure et présentant un axe parallèle audit chant de ladite vitre intérieure et en ce qu'un verrou est fixé à audit flanc intérieur par un moyen de fixation passant par ledit trou de fixation, ledit verrou présentant une aile latérale s'étendant à l'intérieur de ladite cavité d'accrochage et en vis-à-vis d'un bord de ladite face intermédiaire de la vitre intérieure par rotation à 90° de ladite aile latérale.

Ladite rotation à 90° peut être la rotation de ladite aile latérale seule sur elle-même ou la rotation du verrou complet sur lui-même.

Pour que le système de fixation soit suffisamment compact, chaque verrou comporte de préférence une aile latérale unique.

La rotation à 90° du verrou sur lui-même est de préférence réalisée par rotation autour de l'axe du trou de fixation. Le verrou est ainsi introduit dans un espace d'applique, qui est situé entre le vitrage et une traverse de baie adjacente, avec l'aile latérale orientée le long de cet espace, puis le verrou est tourné sur lui-même pour faire pénétrer l'aile latérale dans ladite cavité d'accrochage.

Le verrou fonctionne ainsi à la manière d'un loquet. C'est cette rotation qui permet dans un sens de fixer ou attacher le vitrage à la baie et dans le sens opposé de détacher le vitrage de la baie.

Ladite cavité d'accrochage est de préférence formée par une rainure localisée à l'endroit du verrou ou par un rail allongé ; chaque bord horizontal ou vertical du vitrage comporte alors de préférence un rail unique ; de préférence, il n'y a alors pas de rail dans les coins du vitrage.

Ladite cavité d'accrochage présente de préférence une profondeur, c'est-à-dire une distance entre son fond centripète et son ouverture centrifuge, comprise entre 2,0 et 15,0 mm, de préférence entre 3,0 et 10,0 mm. Cette distance est à la foisgrande pour une bonne fixation du vitrage, c'est-à-dire un bon maintien de l'aile latérale dans la cavité d'accrochage et petite pour ne pas trop restreindre le clair de vitrage.

Afin d'avoir un système plus compact, il est possible que ladite rotation du verrou sur lui-même soit excentrée afin que ladite aile latérale s'éloigne dudit axe du trou de fixation lors du mouvement de la pénétration de ladite aile latérale dans ladite cavité d'accrochage.

De préférence, ladite structure interne ne dépasse pas en direction centrifuge plus loin que le chant de ladite vitre extérieure ou que le chant de ladite vitre intérieure et de préférence encore ladite structure interne ne dépasse en direction centrifuge plus loin que le chant de ladite vitre extérieure ni que le chant de ladite vitre intérieure.

Pour faciliter la fabrication du vitrage, ladite feuille de verre intérieure peut présenter des dimensions identiques (longueur, hauteur) aux dimensions de la vitre intérieure.

Ladite vitre intérieure peut elle-même être feuilletée mais alors, pour faciliter la fabrication, les feuilles constitutives de la vitre présentent de préférence des dimensions identiques (longueur, hauteur).

Dans une variante, le chant de ladite vitre extérieure ou le chant de ladite feuille de verre extérieure est situé en débord centrifuge du chant de ladite vitre intérieure le long d'une partie au moins de la longueur du chant de ladite vitre extérieure ou de ladite feuille de verre extérieure et de préférence le long de la totalité de la longueur du chant (c'est-à-dire le long de la totalité de la périphérie du chant) de ladite vitre extérieure ou de ladite feuille de verre extérieure.

Ledit débord est compris entre 5,0 et 30,0 mm, et de préférence entre 8,0 et 20,0 mm. Cela participe à la compacité de la fixation.

La notion de débord est utilisée en référence au centre de feuille de verre, de la vitre, ou du vitrage ; elle désigne un positionnement centrifuge, plus éloigné de ce centre, que ce qui est utilisé pour référence.

Dans une autre variante, indépendante, ledit chant de ladite feuille de matière plastique et/ou ledit chant de ladite feuille de verre intérieure est (ou sont) situé(s) en retrait centripète du chant de ladite vitre intérieure le long d'une partie au moins de la longueur du chant de ladite feuille de matière plastique et/ou de ladite feuille de verre intérieure et de préférence le long de la totalité de la longueur du chant (c'est-à-dire le long de la totalité de la périphérie du chant) de ladite feuille de matière plastique et/ou de ladite feuille de verre intérieure.

Ledit retrait est, de préférence, compris entre 1,0 et 10,0 mm, et de préférence encore entre 2,0 et 8,0 mm. Cela participe à la compacité de la fixation.

La notion de retrait est utilisée en référence au centre de feuille de verre, de la vitre, ou du vitrage ; elle désigne un positionnement centripète, plus proche de ce centre, que ce qui est utilisé pour référence.

La fabrication d'une vitre feuilletée (ici la vitre extérieure) dont les feuilles constitutives n'ont pas toutes des dimensions identiques (longueur, hauteur) est plus compliquée, mais les avantages procurés par ledit débord et/ou ledit retrait sont trèsimportants : il(s) permet(tent) d'améliorer l'aspect du vitrage et la compacité de la fixation.

Ledit vitrage comprend de préférence un espaceur qui est situé entre ladite feuille de verre intérieure et ladite vitre intérieure, en retrait des chants de ladite feuille de verre intérieure et de ladite vitre intérieure tout en étant écarté, vu en coupe transversale, d'un écart plus en périphérie que la continuité transversale du chant de ladite feuille de verre extérieure, ledit écart étant compris entre 2,0 et 30,0 mm, et de préférence entre 5,0 et 20,0 mm, voire entre 6,0 et 15,0 mm.

Il est possible qu'une feuille de verre, plusieurs feuilles de verre, voire chaque feuille de verre ai(en)t subi un traitement chimique ou thermique destiné à le renforcer.

Au moins une feuille de matière plastique du vitrage, voire toutes les feuilles de matière plastique s'il y en a plusieurs, peut ou peuvent présenter en outre une capacité d'isolation phonique.

Dans un mode de réalisation particulier, le chant de ladite vitre extérieure ou le chant de ladite feuille de verre intérieure comporte une lèvre centrifuge en matière plastique. Cette lèvre participe à la protection du verrou situé plus à l'intérieur.

Le fait que ladite face extérieure du vitrage soit en continuité d'aspect avec ladite face extérieure de ladite baie sur toute sa périphérie implique une distance non nulle entre elles.

Cette distance entre ladite face extérieure du vitrage et ladite face extérieure de ladite baie est de préférence entre 5,0 et 25,0 mm et de préférence encore entre 8,0 et 15,0 mm, ce qui est très faible. Le corps du verrou présente de préférence un diamètre ou une hauteur identique à cette distance, afin de pouvoir être introduit dans l'espace d'applique. L'aile latérale du verrou présente de préférence une largeur identique à cette distance afin de pouvoir être introduite dans l'espace d'applique.

Le long de cette distance, de préférence, un joint d'étanchéité extérieur est présent au contact entre d'une part un bord de ladite face extérieure de la baie et d'autre part le chant de ladite vitre extérieure ou le chant de ladite feuille de verre extérieure lorsque la vitre extérieure est feuilletée, ledit joint d'étanchéité extérieur présentant de préférence une hauteur comprise entre 5,0 et 30,0 mm, et de préférence entre 8,0 et 20,0 mm. Cette faible distance permet d'obtenir un aspect visuel agréable et participe à l'obtention d'un clair de vitrage élevé.

Lorsqu'une lèvre centrifuge est présente, elle peut réaliser un fond pour le joint d'étanchéité extérieur afin de l'empêcher d'atteindre le verrou.

Le vitrage selon l'invention ne comporte, de préférence, aucun élément saillant vers l'extérieur, au-delà de la face extérieure dudit vitrage, qui est aussi la face extérieure de ladite vitre extérieure, afin de diminuer les frottements dans l'air pour le moyen de transport. Le vitrage peut alors être positionné en continuité d'aspect extérieur avec la baie de carrosserie, la face extérieure du vitrage étant à distance de la face extérieure de la baie.

Lorsqu'un joint d'étanchéité extérieur est situé entre ladite face extérieure du vitrage et ladite face extérieure de la baie, alors le vitrage peut être considéré affleurant avec la baie de carrosserie.

Un joint d'étanchéité intérieur est en outre, de préférence, présent au contact entre d'une part ledit flanc intérieur de la baie et d'autre part ladite face intérieure de la vitre intérieure.

Avantageusement, la présente invention permet ainsi de réaliser un vitrage multiple fixe, éventuellement à fenêtre ouvrable, dont la fixation est accessible de l'extérieur et qui présente une vue extérieure lisse, sans élément mécanique plus à l'extérieur que la face extérieure de la vitre extérieure.

Grâce à la fixation selon l'invention, le clair de vitrage est relativement grand ; il est, pour l'essentiel, définis par la position de l'espaceur.

La présente invention se rapporte aussi à l'utilisation d'au moins un verrou (et de préférence plusieurs verrous, notamment plusieurs verrous le long de chaque bord) à aile latérale pénétrant chacune dans ladite cavité d'accrochage par rotation à 90° du verrou sur lui-même pour la fixation d'un vitrage latéral d'un moyen de transport, en particulier un vitrage de train, à une baie périphérique.

Le système de fixation de vitrage selon l'invention est un système pour fixer un vitrage latéral d'un moyen de transport. C'est un système fiable, bien que le vitrage soit destiné à subir de nombreuses vibrations en raison de son utilisation comme vitrage latéral de moyen de transport.

Les détails et caractéristiques avantageuses de l'invention ressortent des exemples non limitatifs suivant, illustré à l'aide des figures ci-jointes pour lesquelles :
- la figure 1 illustre un schéma en perspective de l'extérieure d'une baie de carrosserie de train comportant un vitrage multiple qui est fixé à la baie grâce à un système de fixation selon l'invention, le système étant illustré sans joint d'étanchéité extérieur ;
- la figure 2 illustre un schéma en coupe transversale verticale en bas d'un vitrage fixé à une baie selon un premier mode de réalisation selon l'invention ;
- la figure 3 illustre le schéma du vitrage de la figure 2, seul ;
- la figure 4 illustre un schéma en coupe transversale verticale en haut d'un vitrage fixé à une baie selon un second mode de fixation selon l'invention ;
- la figure 5 et la figure 6 illustrent respectivement un schéma de coté et de face avant d'un verrou selon l'invention à rotation centrée ;
- la figure 7 et la figure 8 illustrent respectivement un schéma de coté et de face avant d'un verrou selon l'invention à rotation excentrée ;
- la figure 9 illustre un schéma de face, par transparence, de l'extérieur, d'un verrou haut en position ouverte selon un troisième mode de réalisation selon l'invention ;
- la figure 10 illustre un schéma de face, par transparence, de l'extérieur, du verrou de la figure 9 en position fermée ; et
- la figure 11 illustre un schéma en perspective, par transparence, de l'extérieur, du verrou de la figure 9 en position fermée.

Dans ces schémas, les proportions entre les dimensions des différents éléments ne sont pas respectées afin de faciliter leur lecture.

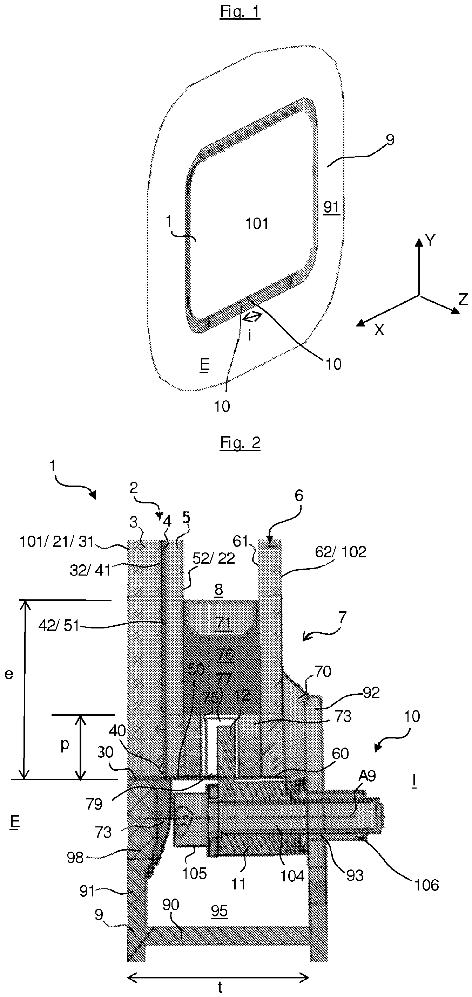

La figure 1 illustre un vitrage 1 latéral gauche selon l'invention d'un moyen de transport, ce vitrage étant positionné verticalement et fixé à une baie 9 de carrosserie de ce moyen de transport.

Il s'agit en particulier d'un vitrage latéral de train.

Ce vitrage réalise ainsi une séparation verticale entre un espace intérieure l qui est à l'intérieur du train et un espace extérieur E qui est à l'extérieur du train. La figure 1 est une vue schématique de l'extérieur.

Les notions de « extérieur » et « intérieur » sont donc considérées dans le présent document respectivement par rapport à cet espace extérieur E (ou orienté vers cet espace extérieur) et cet espace intérieur I (ou orienté vers cet espace intérieur).

Comme il s'agit d'un vitrage latéral, celui-ci s'étend pour l'essentiel selon l'axe généralement appelé « l'axe X» du moyen de transport, qui est l'axe longitudinal central d'avancé du moyen de transport équipé du vitrage selon l'invention en tant que vitrage latéral (ici du côté gauche) et qui correspond à l'axe Xen figure 1. L'axe Y est l'axe vertical et l'axe Z est l'axe transversal.

Dans le cadre du présent document, la notion de « centripète » et celle de « centrifuge » est à considérer dans le plan de la feuille en figure 1, ou dans un plan général du vitrage lorsqu'il est considéré à plat, exprimé par rapport au centre du vitrage, selon les axes X et Y ; le sens centripète est en direction de ce centre alors que le sens centrifuge s'éloigne de ce centre.

Ce vitrage 1 est fixe. Il est d'un seul tenant, sans fenêtre ouvrable à l'intérieur comme cela est connu par exemple de la demande internationale de brevet N° WO 2016/042270 ; pour autant, bien que cela ne soit pas décrit en détail ici, l'invention pourrait s'appliquer à un tel vitrage à fenêtre ouvrable.

Ce vitrage 1 présente une face extérieure 101 qui fait face à l'espace extérieur Eet une face intérieure 102 qui fait face à l'espace intérieur I.

Ce vitrage 1 comprend :
- une vitre extérieure 2 présentant une face extérieure 21 qui fait face à l'espace extérieur E, une face intermédiaire 22 à l'opposé de la face intérieure, ainsi qu'un chant périphérique,
- une vitre intérieure 6 présentant une face intérieure 62 qui fait face à l'espace intérieur I, une face intermédiaire 61 à l'opposé de la face intérieure, ainsi qu'un chant périphérique 60, et
- une structure interne 7 et qui tient ces deux vitres ensemble de telle sorte que le vitrage réalise la séparation entre l'espace extérieur et l'espace intérieur en réalisant une cavité de vitrage 8 qui est située entre les vitres 2, 6.

La structure interne 7 est qualifiée « interne » car elle est située en périphérie interne de la vitre extérieure 2 et en périphérie interne de la vitre intérieure 6 en étant plus vers le centre (plus centripète) que le chant périphérique 20, 60 respectivement de la vitre extérieure 2 et de la vitre intérieure 6 ; c'est-à-dire que lastructure interne 7 ne dépasse pas en direction centrifuge au-delà des chants périphériques 20, 60.

Les feuilles 3, 4, 5 et les vitres 2, 6 du vitrage 1 sont chacune d'un seul tenant.

La vitre intérieure 6 est une feuille de verre monolithique présentant une épaisseur comprise entre 3,0 et 8,0 mm, par exemple de 5,0 mm.

La vitre extérieure 2 est feuilletée et comprend, en partant de l'espace extérieur E : au moins une feuille de verre extérieure 3, une feuille de verre intérieure 5, ainsi qu'une feuille de matière plastique 4 située entre la feuille de verre extérieure 3 et la feuille de verre intérieure 5, chaque feuille 3, 4, 5 de la vitre extérieure 2 présentant un chant 30, 40, 50 périphérique.

La feuille de verre extérieure 3 présente une face extérieure 31 qui est orientée vers l'extérieur E, une face intercalaire 32 qui est orientée vers la feuille de matière plastique 4, intercalaire, avec le chant 30 périphérique situé entre ces deux faces.

La feuille de verre intérieure 5 présente une face intercalaire 51 qui est orientée vers la feuille de matière plastique 4, une face intérieure 52 qui est orientée vers la cavité de vitrage 8, avec le chant 50 périphérique situé entre ces deux faces.

La feuille de matière plastique 4 présente une face intercalaire extérieure 41 qui est orientée vers la face intercalaire 32 et qui est ici au contact de cette face intercalaire 32, une face intercalaire intérieure 42 qui est orientée vers la face intercalaire 51 et qui est ici au contact de cette face intercalaire 51, avec le chant 40 périphérique qui est situé entre ces deux faces intercalaires 41, 42.

La feuille de verre extérieure 3 est par exemple une feuille de verre présentant une épaisseur comprise entre 0,5 et 8,0 mm, par exemple de 6,0 mm.

La feuille de matière plastique 4 intercalaire est par exemple une feuille en polyvinylbutyral (PVB) présent ant une épaisseur comprise entre 0,50 et 1,50 mm, par exemple de 0,76 mm. Cette feuille de matière plastique 4 présente de préférence les mêmes dimensions de longueur et de hauteur que la feuille de verre extérieure 3.

La feuille de verre intérieure 5 est une feuille de verre présentant une épaisseur comprise entre 0,5 et 8,0 mm, par exemple de 5,0 mm.

Ici, le vitrage 1 présente ainsi une épaisseur totale t' de 26,76 mm.

Le vitrage 1 est un vitrage fixe dans le sens où la structure interne 7 est destinée en outre à permettre de fixer le vitrage 1 à une structure 9 du moyen de transport (ici le train), sans possibilité de bouger par rapport à cette structure 9.

Le vitrage 1 est un vitrage multiple dans le sens où il comporte plusieurs vitres 20, 60 ainsi que la cavité de vitrage 8 qui est située entre les deux vitres 20, 60, cette cavité étant remplie d'air ou de gaz, de préférence neutre comme l'argon ou le krypton ; cette cavité participe à l'isolation thermique conférée par le vitrage 1.

La structure interne 7 permet ainsi de maintenir les deux vitres 20, 60 à distance l'une de l'autre, avec une distance constante entre les deux vitres 20, 60, ici de 10,0 mm.

La structure interne 7 comporte une cavité d'accrochage 77 présentant un fond 78 centripète et une ouverture 79 centrifuge.

Cette cavité d'accrochage 77 présente de préférence une profondeur p, c'est-à-dire une distance entre son fond 78, centripète et son ouverture 79, centrifuge, comprise entre 2,0 et 15,0 mm, de préférence entre 3,0 et 10,0 mm et ici de 7,0 mm.

La baie 9 comporte un flanc extérieur 91, orientée verticalement et tournée vers l'espace extérieure, un flanc intérieur 92, orientée verticalement et tournée vers l'espace extérieure, ces deux flancs étant reliés par une traverse 90, horizontale le long des bords horizontaux et verticale le long des bords verticaux. Bien que cela ne soit pas illustré, cette traverse peut aussi être oblique ou en croix. Cette liaison forme un espace d'applique 95, dans lequel le vitrage est positionné puis fixé lors de son installation dans la baie qu'il doit fermer.

La baie 9 est ainsi périphérique : elle fait tout le tour du vitrage 1.

Lorsque le vitrage est fixé à la baie, le flanc intérieur 92 s'étend en direction centripète, plus centripète que le chant 60 de la vitre intérieure 6 et elle présente un trou de fixation 93 qui est situé pluscentrifuge que le chant 60 de la vitre intérieure 6 ; ce trou de fixation 93 présente un axe A9 parallèle au chant 60 de ladite vitre intérieure 6 ; c'est-à-dire horizontal.

Un verrou 10 est fixé au flanc intérieur 92 par un moyen de fixation 104, comme par exemple un boulon présentant une tête 105, et de l'autre côté du flanc intérieur 92 par un écrou 106. Ce boulon passe par le trou de fixation 93 et la tête 105 se trouve ainsi dans l'espace d'applique 95. Le verrou 10 présent e un corps 11, cylindrique, creux, orienté horizontalement à l'intérieur duquel passe librement le moyen de fixation 104 et une aile 12 latérale (et de préférence comporte une seule ai le latérale) s'étendant à partir du corps 11 en direction du centre du vitrage à l'état fixé, à l'intérieur de la cavité d'accrochage 77 et en vis-à-visd' un bord de la face intermédiaire 61 de la vitre intérieure 6.

Cet état fixé du vitrage est atteint par la rotation à 90° du verrou 10 sur lui-même, autour de l'axe du trou de fixation 93.

Pour une fixation correcte du vitrage, il est préférable d'utiliser plusieurs verrous et notamment plusieurs verrous le long de chaque bord du vitrage. L'intervalle i entre deux verrous adjacents est de préférence compris entre 100, 0 et 400, 0 mm, de préférence encore entre 200, 0 et 300, 0 mm.

Comme visible plus particulièrement sur les figures 2 à 4, la structure interne 7 comporte des moyens pour créer et maintenir l'existence de la cavité de vitrage 8 et maintenir le vitrage à la baie et la structure interne 7 comprend :
- un espaceur 71, interne qui est situé entre la feuille de verre intérieure 5 et la vitre intérieure 6,
- un cordon de mastic 76, interne, situé entre la feuille de verre intérieure 5 et la vitre intérieure 6 plus en périphérique que l'espaceur 71,
- un rail 75, interne, allongé, en forme de U, s'étendant entre le bord de la face intermédiaire 22 et le bord de la face 61 et présentant ainsi un fond orienté vers la cavité de vitrage 8 et une ouverture orientée en direction opposée, afin de former la cavité d'accrochage 77, et
- éventuellement un cordon de colle 73, interne, pour coller le rail 75 d'une part en face intermédiaire 22 de la vitre extérieure 2 et d'autre part à la face intercalaire 61 de la vitre intérieure 6.

De préférence, le rail 75, et ainsi la cavité d'accrochage 77, n'est pas en contact direct avec le bord de la face intermédiaire 22 et le bord de la face 61. Le rail 75 est, de préférence, noyé dans le cordon de colle 73.

Bien que cela ne soit pas illustré, à la place d'un rail allongé et présent tout le long de chaque bord du vitrage, il est possible de prévoir que ladite cavité d'accrochage soit formée par une rainure localisée à l'endroit de chaque verrou ; ainsi, entre deux rainures localises, le cordon de mastic 76 remplit la totalité de l'espace entre d'une part l'espaceur 71 et d'autre part l'arête entre le chant 20, 60 et respectivement la face intermédiaire 22, 61.

L'espaceur 71 est situé en retrait des chants 50, 60 de la feuille de verre intérieure 5 et de la vitre intérieure 6, vers le centre du vitrage, tout en étant écarté, lorsque le vitrage est vu en coupe transversale, d'un écart e plus en périphérie que la continuité transversale du chant 60 de la vitre intérieure 6. Cet écart e est, de préférence, compris entre 10,0 et 50,0 mm, et de préférence encore entre 10,0 et 40,0 mm, voire entre 20,0 et 30,0 mm ; il est ici de 24,0 mm ; ce qui confère un claire de vitrage satisfaisant.

L'espaceur 71 peut être par exemple en matière plastique et/ ou en métal et/ ou en alliage métallique ; il permet de maintenir les deux vitres 2, 6 à une distance constante l'une de l'autre et de maintenir la cavité de vitrage 8.

L'espaceur 71 est maintenu en position contre la face intermédiaire 61 de la vitre intérieure 6 et contre la face intérieure 52 de ladite vitre intérieure 5 grâce au cordon de mastic 76.

Le vitrage 1 ne comprend pas de cadre, et notamment pas de cadre rigide métallique, qui maintiendrait les vitres 2, 6 respectivement à la fois par la face extérieure 21 et par la face intérieure 62.

Le flanc intérieur 92 n'est de préférence pas directement en contact avec le bord de la face intérieure 62 de la vitre intérieure 6 grâce à la présence d'un cordon de joint d'étanchéité intérieur 70 ; le cordon de joint d'étanchéité intérieur 70 est de préférence d'un seul tenant et, de préférence encore, n'est pas en contact avec le chant 60 de la vitre interne 6. Il est de préférence préfabriqué puis collé contre le bord de la face intérieure 62.

Le cordon de mastic 76, à lui tout seul ou avec le cordon de colle 73, remplit de préférence tout le reste de l' espace à l'exception de l'espace réal isé par la cavité d'accrochage 77, et cela en direction transversale entre la face intercalaire 62 de la vitre intérieure 6 et la face intermédiaire 22 de la vitre extérieure 2 et de préférence tout l'espace en hauteur entre d'une part l'espaceur 71 et d'autre part l'arête entre le chant 60 et la face 61.

Ledit cordon de colle peut comprendre ou être un cordon de colle à base de polyuréthane ou de silicone ou de MS polymère (c'est-à-dire de polyéther modifié silane) ou de polysulfide, afin que la liaison chimique avec au moins la vitre intérieure soit forte et de préférence que la liaison chimique avec les deux vitres de part et d'autre de la cavité de vitrage soit forte.

Le cordon de colle peut comprendre un profilé métallique qui est collé latéralement de chaque côté de la cavité de vitrage, avec un tel cordon de colle ou être en partie ou complètement intégré dans un tel cordon de colle.

Le cordon de colle pourrait comprendre un câble, et notamment un câble métallique, qui est collé latéralement sur un côté au moins de la cavité de vitrage, afin de permettre de faciliter la rupture de la vitre par traction sur ce câble.

Le flanc extérieur 91 est, de préférence, situé dans la continuité d'aspect (c'est-à-dire ici à l'aplomb) de la face extérieure 31 de la feuille de verre extérieure 3, c'est-à-dire dans la continuité d'aspect de la face extérieure 21 de la vitre extérieure 2, qui est aussi la face extérieure 101 du vitrage 1.

Le joint d'étanchéité extérieur 98 est affleurant avec la face extérieure 31 de la feuille de verre extérieure et ne s'étend pas plus à l'extérieur que cette face extérieure 31.

Le joint d'étanchéité extérieur 98 ne remplit de préférence pas tout l'espace entre le flanc extérieur 91 et le chant 20 de la vitre extérieure 2 afin qu'il soit facile à retirer pour accéder à la tête 105.

Il a été vérifié qu'une isolation thermique adéquate est obtenue sur la base de l'exemple de la figure 1, lorsque ladite cavité de vitrage 8 est d'un seul tenant, qu'elle est remplie d'argon et présente une épaisseur uniforme. La distance entre la face extérieure 101 et la face intérieure 102 est ainsi constante et est ici de 28,76 mm.

Il a été vérifié qu'une tenue mécanique appropriée est obtenue sur la base de l'exemple de la figure 1 lorsque le vitrage 1 est soumis à des conditions similaires à celles qu'il subirait s'il était intégré dans un train roulant à 160 km/ h.

La fixation selon l'invention du vitrage 1 illustré en figure 1 est particulièrement compacte selon son épaisseur car l'épaisseur totale t de cette fixation est quasiment cette de l'épaisseur du vitrage et aucun élément du vitrage ne dépasse plus à l'extérieur ou plus à intérieur que l'épaisseur de ce cadre 72.

En figures 2 à 4 ci-après, l'épaisseur totale t de la fixation est de 31,8 mm. Cette épaisseur totale représente la profondeur de la baie. Une profondeur de baie si petite permet d'augmenter l'espace disponible à l'intérieur du moyen de transport.

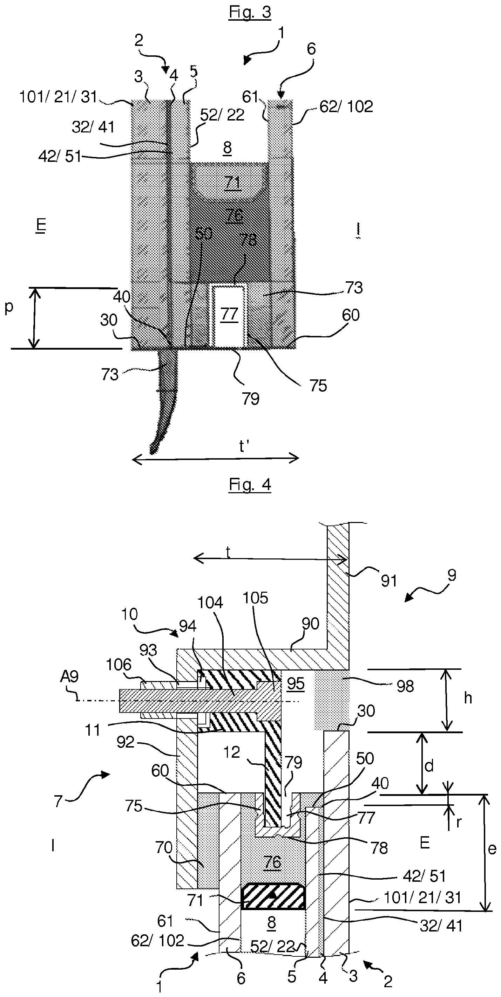

Dans un premier mode de réalisation illustré aux figures2 et 3, l'ouverture du rail 75, et ainsi l'ouverture de la cavité d'accrochage 77, en direction centrifuge est dans le prolongement des chants 20 et 60.

Dansle premier mode de réalisation desfigures2 et 3, la vitre extérieure 2 est aussi grande que la vitre intérieure 6, à la fois en longueur, selon l'axe Xet en hauteur selon l'axe Y.

Dans le premier mode de réalisation des figures 2 et 3, le chant 20 de la vitre extérieure 2 ou le chant 50 de la feuille de verre intérieure 5 comporte une lèvre 73 centrifuge en matière plastique qui s'étend, dans l'espace d'applique 95, en direction de la traverse 90.

Dans le premier mode de réalisation, l'aile 12 latérale du verrou 10 pénètre dans la cavité d'accrochage 77 par rotation simple et directe du verrou à 90° sur lui-même.

Dans un second mode de réalisation, la vitre extérieure 2 est plus grande que la vitre intérieure 6, à la fois en longueur, selon l'axe X et en hauteur selon l'axe Y afin de permettre de cacher une partie du verrou 10 derrière un bord périphérique de la vitre extérieure 2. Plus précisément ici, la feuille de verre extérieure 3 est plus grande que la vitre intérieure 6, à la fois en longueur, selon l'axe X et en hauteur selon l'axe Y. Cela permet de cacher une partie du verrou 10 derrière un bord périphérique de cette feuille de verre extérieure.

Ainsi, le chant 30 de ladite feuille de verre extérieure 3 est situé en débord d, centrifuge, du chant 60 de la vitre intérieure 6 le long d'une partie au moins de la longueur du chant 30 de ladite feuille de verre extérieure 3 et de préférence le long de la totalité de la longueur du chant 30 (c'est-à-dire le long de la totalité de la périphérie du chant 30) de la feuille de verre extérieure 3 ; si la vitre extérieure 2 était monolithique (et non feuilletée), ce pourrait être le chant 20 de la vitre extérieure qui serait situé en débord.

Ainsi, lorsque la vitre extérieure 2 est observée de face, le débord d est de préférence présent tout autour de la vitre extérieure 2 : le chant 30 de la feuille de verre extérieure 3 s'étend plus loin, en direction opposée au centre de la vitre extérieure 2, que le chant 60 de la vitre intérieure 6. Ce débord d est de préférence constant le long d'un bord longitudinal ou latéral considéré ; il est de préférence identique le long de chacun des bords longitudinaux et latéraux de la vitre extérieure 2.

Le débord d est de préférence compris 5,0 et 30,0 mm, et de préférence entre 8,0 et 20,0 mm ; il est ici de 13,0 mm.

Ce débord d peut être caché de la vue de l'espace extérieur E par une couche d'émail située en pourtour de la face extérieure 21 de la vitre extérieure (ou en pourtour de la face extérieure 31 de la feuille de verre extérieure, respectivement lorsque la vitre extérieure est feuilletée).

Dans ce second mode de réalisation, en outre et indépendamment du débord d ci-avant, la feuille de verre intérieure 5 est plus petite que la vitre intérieure 6, à la fois en longueur, selon l'axe X et en hauteur selon l'axe Y.

Lorsque la vitre extérieure 2, feuilletée, est considérée en coupe, le chant 50 de la feuille de verre intérieure 5 est situé en retrait r, centripète, du chant 30 de la feuille de verre extérieure 3 sur une partie au moins de la longueur du chant 50 de la feuille de verre intérieure 5 et de préférence sur la totalité de la longueur du chant 50 de la feuille de verre intérieure 5.

Ainsi, lorsque la vitre extérieure 2 est observée de face, le retrait r est de préférence présent tout autour de la vitre extérieure 2 : le chant 50 de la feuille de verre intérieure 5 est plus vers le centre de la vitre extérieure 2 que le chant 60 de la vitre intérieure 6. Ce retrait r est de préférence constant le long d'un bord longitudinal ou latéral considéré ; il est de préférence identique le long de chacun des bords longitudinaux et latéraux de la vitre extérieure 2.

Le retrait r est de préférence compris entre 1,0 et 10,0 mm, et de préférence entre 2,0 et 8,0 mm ; il est ici de 5,0 mm.

Ce retrait r peut être caché de la vue de l'espace extérieur E par une couche d'émail située en pourtour de la face extérieure 21 de la vitre extérieure (ou en pourtour de la face extérieure 31 de la feuille de verre extérieure, respectivement lorsque la vitre extérieure est feuilletée).

En figure 4, l'ouverture du rail 75, et ainsi l'ouverture de la cavité d'accrochage 77, en direction centrifuge est dans le prolongement uniquement du chant 60 de la vitre intérieure 6.

En figure 4, le cordon de mastic 76 remplit de préférence tout l'espace en direction transversale entre la face intérieure 62 de la vitre intérieure 6 et la face 52 de la feuille de verre intérieure 5, en s'étendant en outre au contact du chant 50 de cette feuille de verre intérieure 5, du chant 40 de la feuille de matière plastique 4, et de la face 32 de la feuille de verre extérieure 3 mais sans s'étendre jusqu'au chant 30.

Sur cette figure 4, le cordon de mastic 76 remplit de préférence tout l'espace en hauteur entre d'une part l'espaceur 71 et d'autre part l'arête entre le chant 60 et la face 61.

Dans le second mode de réalisation, l'aile 12 latérale du verrou 10 pénètre dans la cavité d'accrochage 77 par rotation excentrée du verrou à 90° sur lui-même.

Cette rotation est excentrée afin que ladite aile s'éloigne de l'axe A9 du trou de fixation 93 lors du mouvement de pénétration de l'aile 12 dans la cavité d'accrochage.

Cette rotation excentrée peut être réalisée en prévoyant d'une part une rondelle ovale 94 entre le corps 11 du verrou et le flanc intérieur 92 et d'autre part un évidement cylindrique dans la paroi du corps 11 qui est en vis-à-vis.

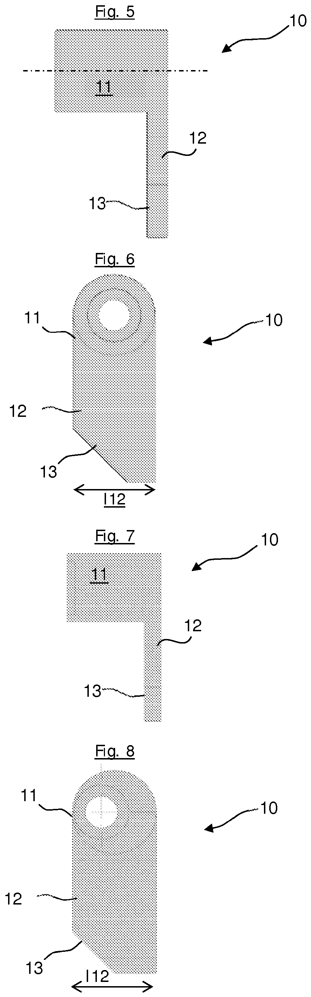

Les figures 5 et 6 illustrent un verrou 10 à rotation centrée : le corps 11 du verrou est un cylindre creux percé d'un tube cylindrique coaxial avec l'axe du cylindre du corps, pour le passage du moyen de fixation 104.

Cesfigures montrent en particulier que l'aile 12 du verrou peut présenter un chanfrein 13, par exemple à 45°, afin de faciliter son passage dans la cavité d'accrochage 77 et venir au contact, ou quasiment au contact, du fond 78.

L'aile présente ici une largeur 112 de 13,0 mm. La longueur entre l'axe du verrou et l'extrémité de l'aile 12 est d'environ 26 mm.

L'aile 12 pénètre ici dans la cavité d'accrochage 77 sur toute la hauteur intérieure du rail 75, c'est-à-dire sur une hauteur d'environ 7 mm.

Les figures 7 et 8 illustrent un verrou 10 à rotation excentrée, identique au précédant sauf en ce que, pour le passage du moyen de fixation 104, le corps 11 est un cylindre creux percé d'un tube cylindrique qui n'est pas coaxial avec l'axe du cylindre du corps : l'axe du tube cylindrique est décalé latéralement par rapport à l'orientation longitudinale de l'aile 12.

Dans les deux variant es de réalisation du verrou ci-avant, l'aile 12 latérale est venue de matière avec le corps 11.

Lesfigures9 à 11 illustrent une troisième variante de réalisation du verrou dans laquellle l'aile 12 est séparée du corps 11.

Cette aile 12 présente en outre, de préférence, une réservation 17 oblong qui accueille la tête 105 du moyen de fixation.

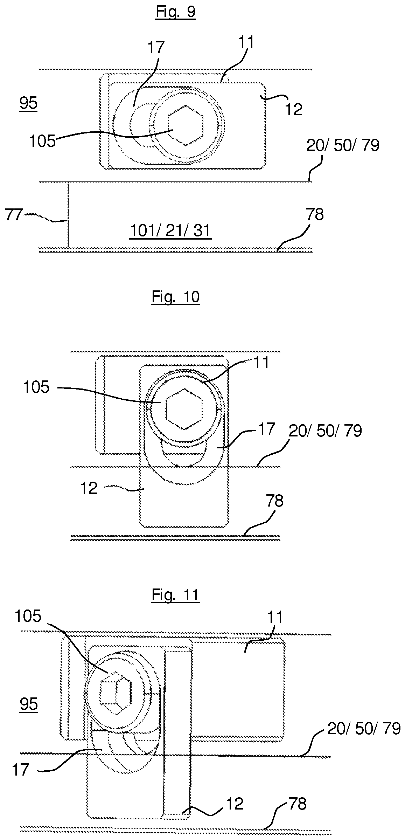

La figure 9 illustre l'aile 12 avant son positionnement dans la cavité d'accrochage. L'aile 12 est intégralement dans l'espace d'applique 95.
La figure 10 illustre l'aile 12 positionnée dans la cavité d'accrochage, après une rotation à 90°.
La figure 11 est une vue identique à la figure 10, mais en perspective.

Cette troisième variante permet de maintenir l'aile 12 en position allongée le long de l'espace d'applique 95, comme visible en figure 9, le temps d'introduire ou de retirer le vitrage 1 (par exemple s'il a été cassé pendant l' usage du moyen de transport) dans ou hors de la baie 9.

Dans cette variante, il n'y a que de ladite aile 12 latérale qui est animée d'une rotation à 90° ; le reste du verrou, et en particulier le corps 11, est immobile.

La présente invention est décrite dans ce qui précède à titre d'exemple. Il est entendu que l'homme du métier est à même de réaliser différentes variantesde l'invention sans pour autant sortir du cadre du brevet tel que défini par les revendications.

En particulier, il est inclus dans la présente invention que la vitre intérieure 6 peut elle-même être feuilletée.

## Revendications

1. Système de fixation d'un vitrage (1) latéral d'un moyen de transport, en particulier un vitrage de train, à une baie (9) périphérique, ledit système comprenant un vitrage et une baie (9) périphérique;
ledit vitrage étant un vitrage multiple, fixe, présentant une face extérieure (101) qui fait face à un espace extérieur (E) et une face intérieure (102) qui fait face à un espace intérieur (I), ladite face extérieure (101) du vitrage étant en continuité d'aspect avec une face extérieure (91) de ladite baie (9) sur toute sa périphérie,
ledit vitrage (1) comprenant :
- une vitre extérieure (2) présentant une face extérieure (21) qui fait face à l'espace extérieur (E) et un chant (20) périphérique, ladite vitre extérieure (2) étant de préférence feuilletée et comprenant alors au moins une feuille de verre extérieure (3), une feuille de verre intérieure (5), ainsi qu'une feuille de matière plastique (4) située entre ladite feuille de verre extérieure (3) et ladite feuille de verre intérieure (5), chaque feuille (3, 4, 5) de ladite vitre extérieure (2) présentant un chant (30, 40, 50) périphérique,
- une vitre intérieure (6) ayant une face intérieure (62) qui fait face à l'espace intérieur (I), une face intermédiaire (61) à l'opposé de la face intérieure, ainsi qu'un chant périphérique (60),
- une structure interne (7) qui est située en périphérie interne de ladite vitre extérieure (2) et en périphérie interne de ladite vitre intérieure (6) en étant plus vers le centre que le chant périphérique (20, 60) respectivement de ladite vitre extérieure (2) et de ladite vitre intérieure (6), et qui tient ces deux vitres ensemble de telle sorte que le vitrage réalise une séparation entre ledit espace extérieur et ledit espace intérieur avec une cavité de vitrage (8) située entre lesdites vitres (2, 6),
- ladite structure interne (7) comportant une cavité d'accrochage (77) présentant un fond (78) centripète et une ouverture (79) centrifuge, ladite baie (9) comportant un flanc intérieur (92) présentant un trou de fixation (93) qui est situé plus centrifuge que ledit chant (60) de ladite vitre intérieure (6) et présentant un axe (A9) parallèle audit chant (60) de ladite vitre intérieure (6), un verrou (10) étant fixé audit flanc intérieur (92) par un moyen de fixation (104) passant par ledit trou de fixation (93), **caractérise en ce que** ledit verrou (10) présente une aile (12) latérale s'étendant à l'intérieur de ladite cavité d'accrochage (77) et en vis-à-vis d'un bord de ladite face intermédiaire (61) de la vitre intérieure (6) par rotation à 90° de ladite aile (12) latérale.

2. Système selon la revendication 1, dans lequel ladite cavité d'accrochage (77) est formée par une rainure localisée ou un rail (75) allongé.

3. Système selon la revendication 1 ou 2, dans lequel le chant (20) de ladite vitre extérieure (2) ou le chant (30) de ladite feuille de verre extérieure (3) est situé en débord (d) centrifuge du chant (60) de ladite vitre intérieure (6) le long d'une partie au moins de la longueur du chant (20, 30) de ladite vitre extérieure (2) ou de ladite feuille de verre extérieure (3) et de préférence le long de la totalité de la longueur du chant (20, 30) de ladite vitre extérieure (2) ou de ladite feuille de verre extérieure (3).

4. Système selon la revendication 3, dans lequel ledit débord (d) est compris entre 5,0 et 30,0 mm, et de préférence entre 8,0 et 20,0 mm.

5. Système selon l'une quelconque des revendications 1 à 4, dans lequel ledit chant (40) de ladite feuille de matière plastique (4) et/ou ledit chant (50) de ladite feuille de verre intérieure (5) est (ou sont) situé(s) en retrait (r) centripète du chant (60) de ladite vitre intérieure (6) le long d'une partie au moins de la longueur du chant (40, 50) de ladite feuille de matière plastique (4) et/ou de ladite feuille de verre intérieure (5) et de préférence le long de la totalité de la longueur du chant (40, 50) de ladite feuille de matière plastique (4) et/ou de ladite feuille de verre intérieure (5).

6. Système selon la revendication 5, dans lequel ledit retrait (r) est compris entre 1,0 et 10,0 mm, et de préférence entre 2,0 et 8,0 mm.

7. Système selon l'une quelconque des revendications 1 à 6, dans lequel ladite rotation est excentrée afin que ladite aile (12) s'éloigne dudit axe (A9) du trou de fixation (93) lors du mouvement de pénétration de ladite aile (12) dans ladite cavité d'accrochage (77).

8. Système selon l'une quelconque des revendications 1 à 7, dans lequel le chant (20) de ladite vitre extérieure (2) ou le chant (50) de ladite feuille de verre intérieure (5) comporte une lèvre (73) centrifuge en matière plastique.

9. Système selon l'une quelconque des revendications 1 à 8, dans lequel un joint d'étanchéité extérieur (98) est présent au contact entre d'une part un bord de ladite face extérieure (91) de la baie (9) et d'autre part le chant (20) de ladite vitre extérieure (2) ou le chant (30) de ladite feuille de verre extérieure (3), ledit joint d'étanchéité extérieur (98) présentant de préférence une hauteur (h) comprise entre 5,0 et 30,0 mm, et de préférence entre 8,0 et 20,0 mm.

10. Système selon l'une quelconque des revendications 1 à 9, dans lequel un cordon de joint d'étanchéité intérieur (70) est présent au contact entre d'une part ledit flanc intérieur (92) de la baie (9) et d'autre part ladite face intérieure (62) de la vitre intérieure (6).

## Patentansprüche

1. Befestigungssystem einer seitlichen Verglasung (1) eines Transportmittels, insbesondere einer Zugverglasung, in einer umlaufenden Öffnung (9), das System umfassend eine Verglasung und eine umlaufende Öffnung (9);
wobei die Verglasung eine feste Mehrfachverglasung ist,
die eine Außenfläche (101), die einem Außenraum (E) gegenüberliegt, und eine Innenfläche (102), die einem Innenraum (I) gegenüberliegt, aufweist, wobei die Außenfläche (101) der Verglasung in eine Außenfläche (91) der Öffnung (9) über ihren gesamten Umfang optisch übergeht,
die Verglasung (1) umfassend:
- eine Außenfensterscheibe (2), die eine Außenfläche (21), die dem Außenraum (E) gegenüberliegt, und eine Umfangskante (20) aufweist, wobei die Außenfensterscheibe (2) vorzugsweise laminiert ist, und umfassend sodann mindestens eine Außenglasscheibe (3), eine Innenglasscheibe (5) sowie eine Kunststoffscheibe (4), die zwischen der Außenglasscheibe (3) und der Innenglasscheibe (5) angeordnet ist, wobei jede Scheibe (3, 4, 5) der Außenfensterscheibe (2) eine Umfangskante (30, 40, 50) aufweist,
- eine Innenfensterscheibe (6), die eine Innenfläche (62), die dem Innenraum (I) gegenüberliegt, eine Zwischenfläche (61) gegenüber der Innenfläche sowie eine Umfangskante (60) aufweist,
- eine Innenstruktur (7), die an dem Innenumfang der Außenfensterscheibe (2) und an dem Innenumfang der Innenfensterscheibe (6) angeordnet ist, wobei sie weiter zu der Mitte hin als zu der Umfangskante (20, 60) jeweils der Außenfensterscheibe (2) und der Innenfensterscheibe (6) liegt, und die diese zwei Fensterscheiben zusammenhält, sodass die Verglasung eine Trennung zwischen dem Außenraum und dem Innenraum mit einem Verglasungshohlraum (8) erzielt, der zwischen den Fensterscheiben (2, 6) angeordnet ist,
- wobei die Innenstruktur (7) einen Aufhängehohlraum (77), der einen Zentripetalboden (78) und eine Zentrifugalöffnung (79) aufweist, vorweist, wobei die Öffnung (9) eine Innenseite (92) vorweist, die ein Befestigungsloch (93) aufweist, das zentrifugaler als die Kante (60) der Innenfensterscheibe (6) angeordnet ist, und eine Achse (A9) parallel zu der Kante (60) der Innenfensterscheibe (6) aufweist, wobei eine Verriegelung (10) an der Innenseite (92) durch ein Befestigungsmittel (104), das durch das Befestigungsloch (93) verläuft, befestigt ist, **dadurch gekennzeichnet, dass** die Verriegelung (10) einen seitlichen Flügel (12) aufweist, der sich in den Aufhängehohlraum (77) hinein und gegenüber einem Rand der Zwischenfläche (61) der Innenfensterscheibe (6) durch Drehung des seitlichen Flügels (12) um 90° erstreckt.

2. System nach Anspruch 1, wobei der Aufhängehohlraum (77) durch eine lokalisierte Nut oder eine verlängerte Schiene (75) ausgebildet ist.

3. System nach Anspruch 1 oder 2, wobei die Kante (20) der Außenfensterscheibe (2) oder die Kante (30) der Außenglasscheibe (3) an dem Zentrifugalüberhang (d) der Kante (60) der Innenfensterscheibe (6) entlang mindestens eines Teils der Länge der Kante (20, 30) der Außenfensterscheibe (2) oder der Außenglasscheibe (3) und vorzugsweise entlang der gesamten Länge der Kante (20, 30) der Außenfensterscheibe (2) oder der Außenglasscheibe (3) angeordnet ist.

4. System nach Anspruch 3, wobei der Überhang (d) zwischen 5,0 und 30,0 mm und vorzugsweise zwischen 8,0 und 20,0 mm liegt.

5. System nach einem der Ansprüche 1 bis 4, wobei die Kante (40) der Kunststoffscheibe (4) und/oder die Kante (50) der Innenglasscheibe (5) in Zentripetalrücksetzung (r) von der Kante (60) der Innenfensterscheibe (6) entlang mindestens eines Teils der Länge der Kante (40, 50) der Kunststoffscheibe (4) und/oder der Innenfensterscheibe (5) und vorzugsweise entlang der gesamten Länge der Kante (40, 50) der Kunststoffscheibe (4) und/oder der Innenfensterscheibe (5) angeordnet ist (oder sind).

6. System nach Anspruch 5, wobei die Rücksetzung (r) zwischen 1,0 und 10,0 mm und vorzugsweise zwischen 2,0 und 8,0 mm liegt.

7. System nach einem der Ansprüche 1 bis 6, wobei die Drehung exzentrisch ist, damit sich der Flügel (12) von der Achse (A9) des Befestigungslochs (93) während der Eindringungsbewegung des Flügels (12) in den Aufhängehohlraum (77) entfernt.

8. System nach einem der Ansprüche 1 bis 7, wobei die Kante (20) der Außenfensterscheibe (2) oder die Kante (50) der Innenglasscheibe (5) eine Zentrifugallippe (73) aus Kunststoffmaterial vorweist.

9. System nach einem der Ansprüche 1 bis 8, wobei eine Außenabdichtung (98) an dem Kontakt zwischen einerseits einem Rand der Außenfläche (91) der Öffnung (9) und andererseits der Kante (20) der Außenfensterscheibe (2) oder der Kante (30) der Außenglasscheibe (3) vorhanden ist, wobei die Außenabdichtung (98) vorzugsweise eine Höhe (h), die zwischen 5,0 und 30,0 mm und vorzugsweise zwischen 8,0 und 20,0 mm liegt, aufweist.

10. System nach einem der Ansprüche 1 bis 9, wobei ein Innenabdichtungswulst (70) an dem Kontakt zwischen einerseits der Innenseite (92) der Öffnung (9) und andererseits der Innenfläche (62) der Innenfensterscheibe (6) vorhanden ist.

## Claims

1. A system for securing a side glazing (1) of a means of transportation, in particular a train glazing, to a peripheral bodywork opening (9), said system comprising a glazing and a peripheral bodywork opening (9) ; said glazing being a fixed multiple glazing having an external face (101) which faces an external space (E) and an internal face (102) which faces an internal space (I), said external face (101) of the glazing being continuous in appearance with an external face (91) of said bodywork opening (9) over its entire periphery,
said glazing (1) comprising:
- an external pane (2) having an external face (21) which faces the external space (E) and a peripheral edge (20), said external pane (2) preferably being laminated and then comprising at least one external glass sheet (3), an internal glass sheet (5), and a plastic sheet (4) located between said external glass sheet (3) and said internal glass sheet (5), each sheet (3, 4, 5) of said external pane (2) having a peripheral edge (30, 40, 50),
- an internal pane (6) having an internal face (62) which faces an internal space (I), an intermediate face (61) opposite the internal face, and a peripheral edge (60),
- an inner structure (7) which is located at the inner periphery of said external pane (2) and at the inner periphery of said internal pane (6) being more toward the center than the peripheral edge (20, 60) of said external pane (2) and said internal pane (6) respectively, and which holds these two panes together such that the glazing provides a separation between said external space and said internal space with a glazing cavity (8) located between said panes (2, 6),
said inner structure (7) comprising a hooking cavity (77) having a centripetal bottom (78) and a centrifugal opening (79), said bodywork opening (9) comprising an internal flank (92) having an attachment hole (93) which is located more centrifugal than said edge (60) of said internal pane (6) and having an axis (A9) parallel to said edge (60) of said internal pane (6), a latch (10) is secured to said internal flank (92) by an attachment means (104) passing through said attachment hole (93), ***characterized in that*** said latch (10) has a lateral wing (12) extending within said hooking cavity (77) and opposite an edge of said intermediate face (61) of the internal pane (6) by rotating said lateral wing (12) through 90°.

2. The system according to claim 1, wherein said hooking cavity (77) is formed by a localized groove or elongated rail (75).

3. The system according to claim 1 or 2, wherein the edge (20) of said external pane (2) or the edge (30) of said external glass sheet (3) is located on a centrifugal overhang (d) of the edge (60) of said internal pane (6) along at least a portion of the length of the edge (20, 30) of said external pane (2) or said external glass sheet (3) and preferably along the entire length of the edge (20, 30) of said external pane (2) or said external glass sheet (3).

4. The system according to claim 3, wherein said overhang (d) is between 5.0 and 30.0 mm, and preferably between 8.0 and 20.0 mm.

5. The system according to any one of claims 1 to 4, wherein said edge (40) of said plastic sheet (4) and/or said edge (50) of said internal glass sheet (5) is (or are) located on a centripetal recess (r) from the edge (60) of said internal glass sheet (6) along at least a portion of the length of the edge (40, 50) of said plastic sheet (4) and/or of said internal glass sheet (5) and preferably along the entire length of the edge (40, 50) of said plastic sheet (4) and/or of said internal glass sheet (5).

6. The system according to claim 5, wherein said recess (r) is between 1.0 and 10.0 mm, and preferably between 2.0 and 8.0 mm.

7. The system according to any one of claims 1 to 6, wherein said rotation is eccentric so that said wing (12) moves away from said axis (A9) of the attachment hole (93) upon penetration movement of said wing (12) into said hooking cavity (77).

8. The system according to any one of claims 1 to 7, wherein the edge (20) of said external pane (2) or the edge (50) of said internal glass sheet (5) has a centrifugal lip (73) of plastic material.

9. The system according to any one of claims 1 to 8, wherein an external tightness seal (98) is present in contact between, on the one hand, an edge of said external face (91) of the bodywork opening (9) and, on the other hand, the edge (20) of said external pane (2) or the edge (30) of said external glass sheet (3), said external tightness seal (98) preferably having a height (h) between 5.0 and 30.0 mm, and preferably between 8.0 and 20.0 mm.

10. The system according to any one of claims 1 to 9, wherein an inner tightness seal bead (70) is present in contact between said internal flank (92) of the bodywork opening (9) on the one hand and said internal face (62) of the internal pane (6) on the other hand.
